(19) Europäisches Patentamt / European Patent Office / Office européen des brevets

(11) **EP 2 983 909 B2**

(12) **NEW EUROPEAN PATENT SPECIFICATION**
After opposition procedure

(45) Date of publication and mention
of the opposition decision:
**17.07.2024   Bulletin 2024/29**

(45) Mention of the grant of the patent:
**09.06.2021   Bulletin 2021/23**

(21) Application number: **14715104.7**

(22) Date of filing: **01.04.2014**

(51) International Patent Classification (IPC):
***B32B 17/10*** *(2006.01)*

(52) Cooperative Patent Classification (CPC):
**B32B 17/10761; B32B 17/10036; B32B 17/10266;**
**B32B 17/10348; B32B 17/10541; B60Q 3/208;**
**B60Q 3/64; B60Q 3/745; G02B 6/0043;**
**G02B 6/0058;** G02B 6/0068

(86) International application number:
**PCT/GB2014/051016**

(87) International publication number:
**WO 2014/167291 (16.10.2014 Gazette 2014/42)**

(54) **A GLAZING**

VERGLASUNG

VITRAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.04.2013   GB 201306726**

(43) Date of publication of application:
**17.02.2016   Bulletin 2016/07**

(73) Proprietor: **Pilkington Group Limited**
**Nr. Ormskirk**
**Lancashire L40 5UF (GB)**

(72) Inventor: **VOSS, Jonathan Peter**
**Nr Ormskirk**
**Lancashire, L40 5UF (GB)**

(74) Representative: **Fortt, Simon Merton**
**Pilkington Group Limited**
**Intellectual Property**
**European Technical Centre**
**Hall Lane**
**Lathom**
**Ormskirk, Lancashire L40 5UF (GB)**

(56) References cited:
| | |
|---|---|
| WO-A1-2005/054915 | WO-A1-2007/077099 |
| WO-A1-2013/110885 | WO-A1-2014/060409 |
| FR-A1- 2 987 323 | US-A1- 2012 320 621 |

EP 2 983 909 B2

**Description**

The present invention relates to a glazing for a vehicle.

Vehicles, for example cars and buses, have a number of window openings in their bodywork into which glazings may be fitted; the glazings include windscreens, rear window glazings, side window glazings and roof glazings. In a typical car, the windscreen is a laminated glazing (i.e. having two plies of glazing material joined together by a ply of interlayer material extending between them) for safety reasons, and the remainder of the glazings are usually toughened glass.

Most vehicles have courtesy lights provided in the cabin, typically adjacent the glazing. The lights are often located above passenger windows and adjacent the rearview mirror. The lights give a degree of illumination, providing the driver or passenger with sufficient light to safely enter the vehicle. However, the illumination is limited and the light does not reach, for example, a footwell. In order to address this problem, it is known to provide additional lighting toward the base of a door. Disadvantageously, such lights provide minimal brightness and are a drain on the vehicle battery.

It is known to provide a vehicle glazing with a means of integrated lighting. WO 2005/054915 describes one example of such a glazing. It discloses a "light-guiding assembly" in the form of a laminated vehicle roof. The assembly comprises two sheets of glass joined together by a polymeric laminating interlayer material, and a means of integrated lighting in the form of light-coupling means for coupling light into the interlayer material. "Scattering centres" of highly reflective pigments are located on the surface of the interlayer material to allow light to exit the glazing creating a brightening effect of the vehicle roof. Disadvantageously, the printing of the interlayer takes place separate from the printing and processing of the automotive glazing. As such, the overall cost of production is increased which is economically undesirable.

It is an object of the present invention to provide a glazing which enables improved illumination for a vehicle cabin.

According to of the present invention there is provided a glazing for a vehicle as set out in independent claim 1.

Light reflects off surfaces in a known manner, in accordance with laws of reflection. When a light wave crosses a boundary between materials with different kinds of refractive indices, the wave will be partially refracted at the boundary surface, and partially reflected. However, if the angle of incidence is greater (i.e. the direction of propagation is closer to being parallel to the boundary) than the critical angle, the angle of incidence at which light is refracted such that it travels along the boundary, then the wave will not cross the boundary and instead be totally reflected back internally. This can only occur where the wave travels from a medium with a higher refractive index [$n_1$] to one with a lower refractive index [$n_2$].

The critical angle $\theta_c$ is calculated according to

$$\theta = sin^{-1}\left(\frac{n_2}{n_1}\right).$$

For example, for glass to air $n_1$ = 1.51 and $n_2$ = 1.00, and so $\theta_c$ = 41.4° from normal (perpendicular to the boundary). However, for glass to interlayer material (e.g. PVB), $n_1$ = 1.51 and $n_2$ = 1.48, and so $\theta_c$ = 78.6° from normal and so light will be totally reflected.

If light is coupled into the glass at an edge, for a critical angle of $\theta_c$, the minimum distance in from the glass edge at which total internal reflection occurs for all light rays is :

$$x = \frac{y}{\tan\left(90 - \theta\right)}.$$

Therefore, for a typical automotive glazing having a glass edge 2.1mm thick (y) and a critical angle of 78.6°, light rays which first meet the glass/PVB interface more than about 10mm from the edge will be totally internally reflected in the second ply and not pass into the PVB.

In the present invention, provision of the light scattering means on the exterior surface of the second ply is advantageous. Primarily, said means causes light that would be totally internally reflected due to the refractive index differential between glass/air, to become scattered and thus be emitted, creating a brightening effect in the vehicle cabin.

In this arrangement, a percentage of the coupled light that enters the second ply is scattered out through the light scattering means, a proportion is reflected along the second ply, and a portion is scattered through the interlayer and may pass through the first ply.

Preferably, the light source is mounted with respect to the second ply such that substantially all of the light exiting the light source is directed into the second ply. The light scattering means is provided on surface 4 of the glazing. Surface 4 is commonly understood to mean the surface of a laminated glazing which faces the interior or cabin of a vehicle.

During production of an automotive glazing, it is important that nothing impedes the press bending or sag bending process and so, for example, surface printing must be applied to a surface remote from a bending mould or sag bending rollers. Consequently, known processes print an obscuration black band on surface 2 or surface 4 of the glazing. In the present invention, the light scattering means is printed on surface 4, in keeping with automotive glazing processes. As such, minimal adaption of existing processes is required in order to implement the invention which is economically advantageous.

The light scattering means comprise a non-opaque ink. The non-opaque ink is a semi-transparent or a translucent ink. Preferably, said ink comprises a suspension of frits, preferably glass frits, and preferably inorganic pigments in a preferably organic medium (preferably resins, solvents and additives), and is preferably an IR-drying glass enamel. An example of said ink is that supplied by Johnson Matthey B.V, Fregatweg 38, Maastricht, The Netherlands, product reference AF3901-654-63 or AF3900-654-63. An alternative ink is one manufactured by Ferro product reference 104001.

Preferably, the non-opaque ink is provided as at least one line on the glazing. Preferably, said ink is provided as a plurality of discontinuous lines or dots on the surface of the glazing. The ink may comprise at least one shaped area on the surface of the glazing. Preferably, the ink is applied by a screen printing process. The ink may be provided as an automotive glazing obscuration band.

Preferably, the ink is between 5 to 100$\mu$m in thickness on the glazing when fired, preferably between 10 to 50 $\mu$m, most preferably between 20 to 30 $\mu$m.

Preferably, a reflector is provided on a surface of the first or second ply. Preferably, the reflector is provided on an inner facing surface of the glazing. Preferably, the reflector is provided adjacent the interlayer. Most preferably, the reflector is provided on surface 2 of the glazing.

In a most preferred arrangement, the reflector is provided on surface 2 of a laminated glazing and the light scattering means, preferably the non-opaque ink is provided on surface 4. Preferably, the reflector is of the same size and configuration to the light scattering means. Preferably, the reflector is positioned behind the light scattering means in the laminate arrangement. The reflector on surface 2, preferably behind the light scattering means on surface 4, boosts the visible light through surface 4.

Preferably, the reflector comprises an ink. Most preferably, the reflector comprises a light diffusing reflective material, preferably a white or metallic effect material, for example a material having an outward appearance of a metal, including a highly reflective material, most preferably an enamel ink for automotive use. For example, a suitable white ink would be that manufactured by Ferro their reference 194002.

Preferably, the reflector ink is between 5 to 100$\mu$m in thickness on the glazing when fired, preferably between 10 to 50 $\mu$m, most preferably between 20 to 30 $\mu$m.

Advantageously, the reflector causes light which is scattered away from the second ply to be reflected back towards said ply. In so doing, the illumination in the vehicle cabin is boosted.

An opaque ink is provided on at least a surface of the glazing. The opaque ink is provided adjacent the light scattering means on surface 4 of the glazing. The opaque ink, preferably a black ink may be provided behind and/or on top of at least a portion of the light scattering means.

Preferably, the opaque print is provided adjacent at least a portion of the reflector. Preferably, the opaque print is provided behind and/or on top of the reflector, preferably being located on surface 2 of the glazing.

Preferably, the non-opaque ink, and/or the reflector, and/or the opaque ink are screen printed on to the glazing in a multi-pass screen printing process.

Preferably, the or each ply of glass is a pane of extra clear glass (glass having greater than 85 % visible light transmission (measured with Illuminant A) at thicknesses preferably from 2 to 20 mm. Preferably, at least one ply of glazing is a pane of low-iron, for example a ply of OPTIWHITE™ glass available from Pilkington Group Limited, having a visible light transmission of greater than 85 % preferably at thicknesses in the range of 2 to 20 mm.

Advantageously, the use of such low iron glazing minimises the green colour produced as a result of light absorption in a high iron glazing.

A ply of the glazing may be body-tinted glass, the composition of which includes one or more of the following colourants: iron oxide, cobalt oxide, selenium, chromium oxide, titanium oxide, manganese oxide, copper oxide, vanadium oxide, nickel oxide. The reflector may be provided on the body tinted ply.

Preferably, the first glass ply is a body-tinted glass and the second glass ply is a low iron glass, preferably OPTIWHITE™.

The plies of glazing material may be flat or they may be curved. Each pane may be between 0.5 and 25 mm in thickness, preferably between 1 and 5 mm. The overall thickness of the glazing may therefore be between 1.5 and 100 mm, preferably between 2 and 50 mm, and further preferably between 2.5 and 20 mm. A solar control coating may be provided on a surface of at least one pane of glazing material or within the interlayer.

Preferably, the interlayer material may be any material known in the art that is suitable for forming a laminate and providing the required differential in refractive index. Preferably, the interlayer is polyvinylbutyral ("PVB"). The interlayer may be polyvinyl chloride ("PVC"), polyurethane ("PU") or an ethyl vinyl acetate ("EVA"). Preferably, the interlayer is provided in a thickness of between 0.38 and 1.1 mm, most preferably 0.76 mm.

Preferably, the light source comprises at least one LED. Preferably, the or each light source is mounted with respect to an edge of a ply of the glazing. In this manner, the ply functions as a waveguide for the coupled-in light. When a plurality of light sources is provided, preferably each is mounted with respect to different edges of the glazing.

An embodiment of the invention will now be described, by way of example only, with reference to the accompanying drawings, wherein:

Figure 1 shows a schematic perspective view part of a vehicle incorporating a typical glazing;

Figure 2 shows a schematic perspective view of part of a vehicle incorporating a glazing according to the present invention;

Figure 3 shows a schematic sectional side view of a glazing not according to the present invention;

Figure 4 shows a schematic sectional side view of an alternative embodiment of a glazing according to the present invention;

Figure 5 shows a schematic sectional side view of an alternative embodiment of a glazing according to the present invention;

Figure 6 shows a schematic sectional side view of an alternative embodiment of a glazing according to the present invention;

Figures 7a and 7b show a schematic side view and a schematic plan view respectively of an alternative glazing not according to the present invention;

Figures 8a and 8b show a schematic side view and a schematic plan view respectively of an alternative embodiment of a glazing according to the present invention;

Figures 9a and 9b show a schematic sectional side view and a schematic plan view respectively of an alternative embodiment of a a glazing according to the present invention; and

Figure 10 shows a schematic sectional side view of a further alternative embodiment of a glazing according to the present invention.

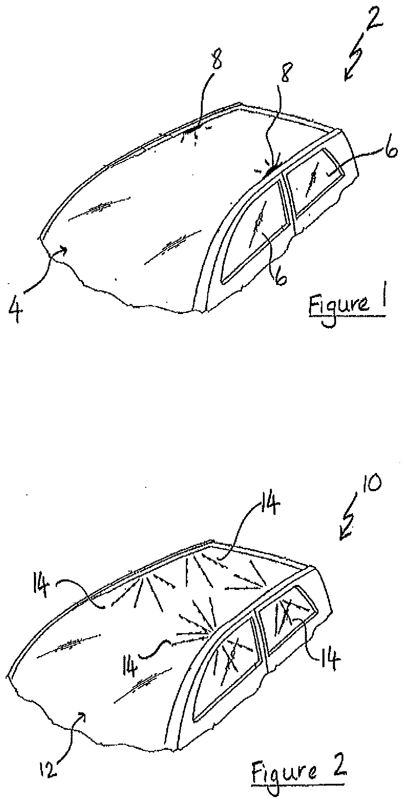

Figure 1 shows a typical vehicle 2 comprising a roof glazing 4 and side windows 6. Courtesy lights 8 are provided inside the cabin, located above the rear passenger doors. Such lights 8 are generally small and provide a degree of illumination only to their immediate vicinity as illustrated in the figure.

Figure 2 shows a vehicle 10 incorporating a glazing 12 according to the present invention. A panoramic roof glazing is shown for ease of illustration of the invention but it will be understood by the reader that the invention is not limited to such roof glazings and includes windscreens, rear window glazings, and side window glazings. It is shown in Figure 2 that the glazing 12 provides increased illumination (shown by dotted lines 14) into the cabin when compared with the typical glazing of Figure 1. The details of how this is achieved are described below.

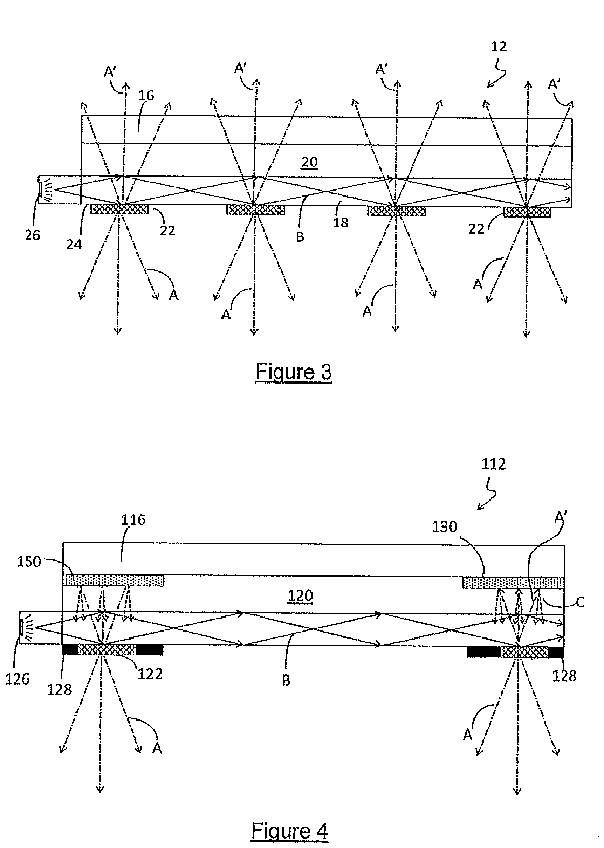

Figure 3 shows a glazing 12 not according to the invention. The glazing 12 is a laminated glazing comprising a first glass ply or sheet 16 and a second glass ply or sheet 18 bonded together by an interlayer 20, typically comprising PVB. The first and second sheets 16, 18 are clear glass, preferably each or both being a pane of low iron, extra-clear glass, in particular, OPTIWHITE™ glass available from Pilkington Group Limited in the UK. Such glass has a visible light transmission of greater than 85% at thicknesses in the range of 2 to 20 mm.

Non opaque ink 22 (a light scattering means or outcoupler) is provided on the second glass sheet 18 as a discontinuous print as shown in Figure 3. The ink 22 is applied to an exterior surface 24 of the second glass sheet 18, i.e. the surface which faces the interior of the cabin, often referred to as "surface 4" of a glazing.

The ink 22 is applied to the sheet 18 by a conventional automotive screen printing process whereby ink is printed on to a surface of the glazing which does not come into contact with a press bending mould or sag bending rollers, i.e. surface 2 or surface 4 of a glazing. Ink printed on to surfaces 1 or 3 would smudge and be damaged.

The non-opaque ink 22 is transparent or preferably translucent. A suitable ink is that supplied by Johnson Matthey B.V, Fregatweg 38, Maastricht, The Netherlands, product reference AF3901-654-63 or AF3900-654-63. The ink 22 comprises a suspension of frits and inorganic pigments in an organic medium (resins, solvents and additives), and is an IR-drying glass enamel in a 2-methoxymethylethoxy propanol carrier medium. An alternative ink is one manufactured by Ferro product reference 104001.

At least one LED 26 is located adjacent an edge of the second sheet 18 to act as an optical coupler. The LED is positioned to ensure that light enters the second sheet 18 at an angle greater than the appropriate critical angle $\theta_C$ for total internal reflection at the surfaces of sheet 18. Arrows B schematically show the resulting path of light coupled into the second sheet 18.

In use, when light hits the ink 22, because the ink is not totally reflective, it acts as a light scattering centre. Light is caused to scatter in all directions, but primarily in two general directions as represented by arrows A, A' in the figures. Light "A" passes through the ink 22 and out of the glass to provide illumination to the cabin of the vehicle. Light A' passes through the interlayer 20 and out through the first substrate 16.

In order to maximise the illumination effect, a reflector 150 may be provided on a glazing 112 as shown in Figure 4. The glazing 112 comprises a first and second glass sheet 116, 118 having an interlayer 120 therebetween. The non-opaque ink or outcoupler 122 is provided on surface 4 of the second sheet 118. A black obscuration band print 128 is provided at each side of the outcoupler 122. A reflector 150 is provided on the first glass sheet 116, on an interior facing surface 130 i.e. surface 2 of the glazing. The reflector 150 comprises a light diffusing reflective material, preferably a white or metallic effect material, preferably an enamel ink for automotive use. For example, a suitable white ink would be that manufactured by Ferro their reference 194002.

In use, the reflector 150 causes a boost in the light output at surface 4 because emission through the first glass sheet 116 is substantially prevented. Specifically, light A' is reflected from reflector 150 and is scattered towards the outcoupler 122 (indicated by arrows C). The scattered light that strikes the outcoupler 122 at high angles of incidence will emerge therefrom causing the area of the outcoupler to emit light and become luminous (indicated by arrows A). Provision of the black print 128 helps to focus the area of illumination as light hitting the black print 128 will either be absorbed or reflected, in so doing, this reduces the direct visibility of the reflector 150 other than through the outcoupler 122.

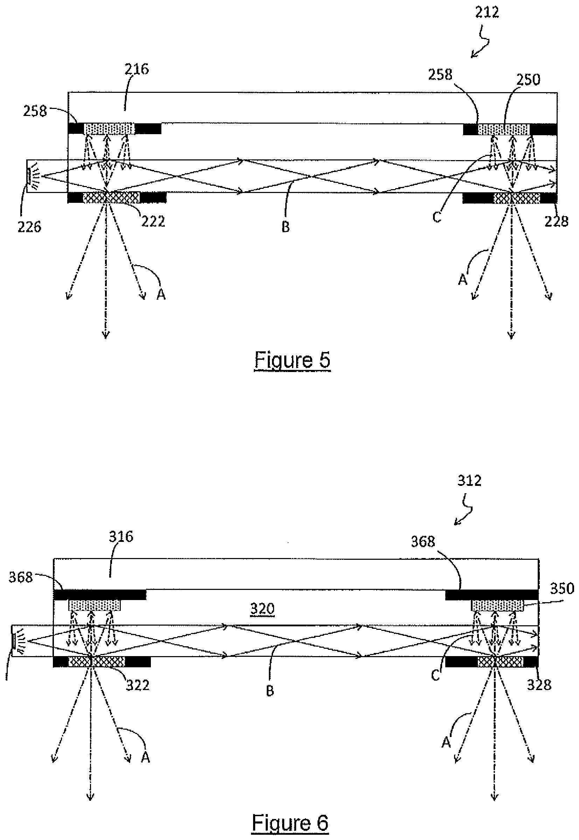

Figure 5 shows a further embodiment of the invention of Figure 4 wherein a glazing 212 comprises an additional black print 258 on surface 2. The black band print 258 is adjacent either edge of a reflector 250. In so doing, reflected light is from a specified area 250. Such an arrangement enables decorative or patterned designs to be created.

Figure 6 shows an embodiment of the invention having a glazing 312 in which the reflector 350 is printed on top of a surface 2 black print 368. The black print 368 provides a uniform appearance from above the glazing, and also acts to block any stray light which may pass through the reflector 350 and therefore all light is reflected providing maximum possible illumination to the cabin.

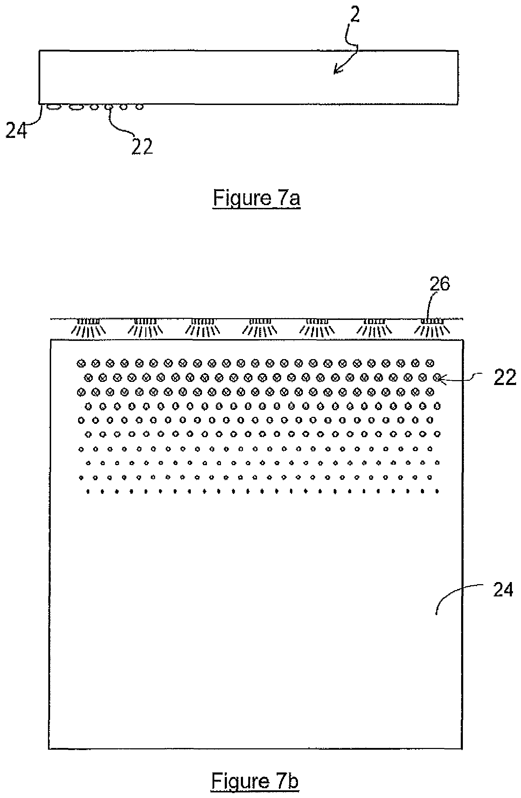

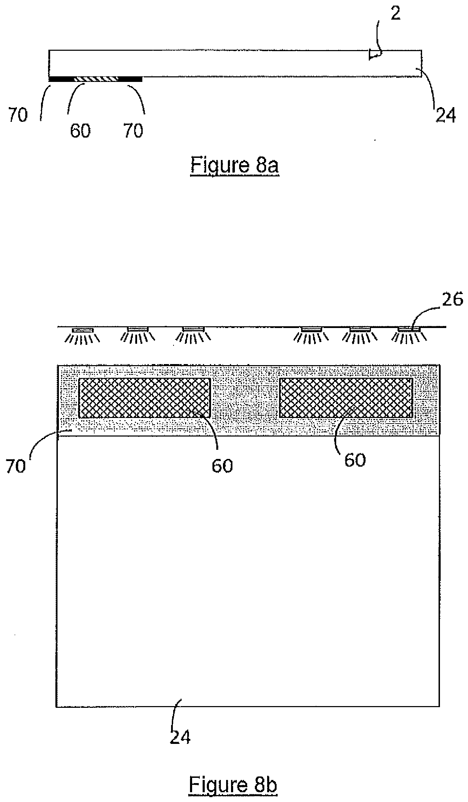

The non-opaque ink may be provided in the form of an obscuration band for an automotive glazing, replacing black band print. For example, as shown in Figures 7, the non-opaque ink is printed on the exterior surface 24 (surface 4) of the glazing 2. The ink 22 comprises a plurality of dots extending from the edge of the glazing. LEDs 26 are located around the periphery of the glazing to ensure a waveguide is created through the second glass sheet. Alternatively, the non-opaque ink may be arranged as a number of strips 60 on the surface of a glazing as shown in Figures 8. Each of the strips 60 are within a black print obscuration band 70.

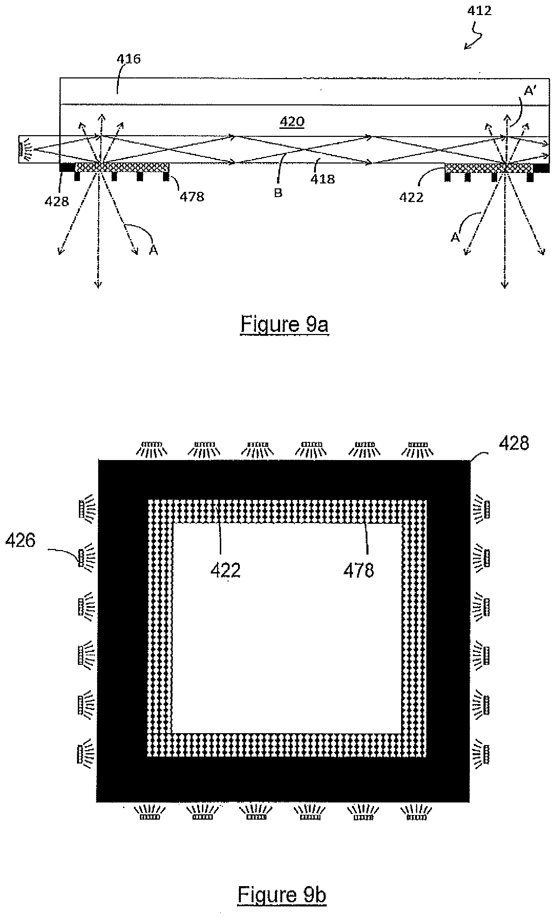

Figures 9 show an alternative arrangement of a glazing 412 wherein a first black obscuration band print 428 is provided on surface 4 of the second glass sheet, adjacent the non-opaque ink 422, and a second black print 478 is provided on the surface of the non-opaque ink 422 as shown in Figure 9a. In this configuration, an illuminated edge is created to the obscuration band.

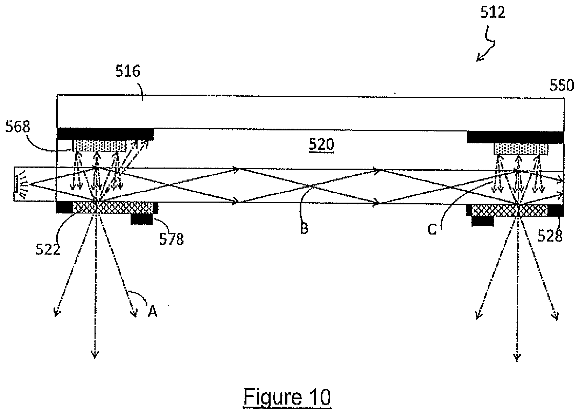

Figure 10 shows a further embodiment of the invention, similar to that of Figure 6 wherein a glazing 512 has a reflector 550 printed on top of a surface 2 black print 568.

The non opaque ink 522 has been extended to a length substantially the same as the surface 2 black print 568. A second black print 578 is provided on top of a section of the non-opaque ink 522. In this way, some light that passes beyond the outcoupling window is still scattered and so does not continue to channel along the second ply. In so doing, the light intensity that passes into the transparent area is reduced. Advantageously, the visibility of defects in the transparent part of the glass is minimised.

Advantageously, provision of a light source adjacent a glazing having a non-opaque ink on surface 4 of a laminated glazing, gives illumination to the interior of a cabin of a vehicle. The illumination is spread substantially evenly across the glazing allowing for an increase in brightness and uniformity of illumination throughout the cabin.

Further, by reducing the amount of light that reaches the open or middle area of the glass, causes a reduction in the visibility of scratches of defects that may be present on the glass.

Advantageously, the non-opaque ink can be applied during standard automotive glazing processing, without modification to a press bending or sag bending process. This is because said ink is applied to surface 4 of the glazing which does not come into contact with process moulds or rollers.

**Claims**

1. A glazing (12, 112, 212, 312, 412, 512) for a vehicle, the glazing comprising at least a first ply (16, 116, 216, 316, 416, 516), at least a second ply (18, 118, 218, 318, 418), and an interlayer (20, 120, 220, 320, 420, 520) therebetween,

   the second ply mountable with respect to a light source (26, 126, 226), the light source being operable to couple light into said second ply, wherein light scattering means (22, 122, 222, 322, 422, 522) comprising a non-opaque ink are provided on an exterior surface (24) of the second ply, the light scattering means being adapted to cause at least a portion of the coupled light to scatter and be transmitted through said scattering means, wherein the non-opaque ink is a semi-transparent or a translucent ink, and an opaque ink (128, 228, 258, 328, 368, 70, 428, 478, 528, 568, 578) is provided on at least a surface of the glazing, wherein the light scattering means are provided on surface 4 (24) of the glazing and the opaque ink (128, 228, 328, 70, 428, 528) is provided adjacent at least a portion of the light scattering means (22, 122, 222, 322, 422, 522) on surface 4 of the glazing.

2. A glazing as claimed in claim 1, wherein the non-opaque ink is provided as a plurality of discontinuous lines or dots on the surface of the glazing.

3. A glazing as claimed in claim 1 or 2, wherein a reflector (150, 250, 350, 550) is provided on a surface (130) of the first or second ply.

4. A glazing as claimed in claim 3, wherein the reflector is provided on an inner facing surface of the or each ply.

5. A glazing as claimed in claim 4, wherein the reflector (150, 250, 350, 550) is provided adjacent the interlayer (120, 220, 320, 520).

6. A glazing as claimed in claim 4 or 5, wherein the reflector is provided on surface 2 of the glazing.

7. A glazing as claimed in any one of claims 3 to 6, wherein the reflector is of the same size and configuration as the light scattering means.

8. A glazing as claimed in any one of claims 3 to 7, wherein the reflector comprises a light diffusing reflective material.

9. A glazing as claimed in claim 8, wherein the light diffusing reflective material is a white or metallic effect material.

10. A glazing as claimed in any one of the preceding Claims, wherein at least one ply of the glazing is a pane of low-iron glass having a visible light transmission of greater than 85%, preferably at thicknesses in the range of 2 to 20 mm.

**Patentansprüche**

1. Verglasung (12, 112, 212, 312, 412, 512) für ein Fahrzeug, wobei die Verglasung mindestens eine erste Lage (16, 116, 216, 316, 416, 516), mindestens eine zweite Lage (18, 118, 218, 318, 418) und eine Zwischenschicht (20, 120, 220, 320, 420, 520) dazwischen umfasst,

wobei die zweite Lage in Bezug auf eine Lichtquelle (26, 126, 226) montierbar ist, wobei die Lichtquelle betreibbar ist, um Licht in die zweite Lage einzukoppeln,
wobei Lichtstreumittel (22, 122, 222, 322, 422, 522), die eine nicht-opake Tinte umfassen, an einer äußeren Oberfläche (24) der zweiten Lage vorgesehen sind,
wobei die Lichtstreumittel eingerichtet sind, um zu bewirken, dass mindestens ein Teil des eingekoppelten Lichts gestreut und durch die Streumittel durchgelassen wird, wobei die nicht-opake Tinte eine semi-transparente oder eine transluzente Tinte ist, und
eine opake Tinte (128, 228, 258, 328, 368, 70, 428, 478, 528, 568, 578) an wenigstens einer Oberfläche der Verglasung vorgesehen ist, wobei
die Lichtstreumittel an der Oberfläche 4 (24) der Verglasung vorgesehen sind, und die opake Tinte (128, 228, 328, 70, 428, 528) benachbart zu einem Teil der Lichtstreumittel (22, 122, 222, 322, 422, 522) an der Oberfläche 4 der Verglasung vorgesehen ist.

2. Verglasung nach Anspruch 1, bei der die nicht-opake Tinte als eine Mehrzahl von diskontinuierlichen Linien oder Punkten an der Oberfläche der Verglasung vorgesehen ist.

3. Verglasung nach Anspruch 1 oder 2, bei der ein Reflektor (150, 250, 350, 550) an einer Oberfläche (130) der ersten oder zweiten Lage vorgesehen ist.

4. Verglasung nach Anspruch 3, bei der der Reflektor auf einer nach innen gewandten Oberfläche der oder jeder Lage vorgesehen ist.

5. Verglasung nach Anspruch 4, bei der der Reflektor (150, 250, 350, 550) angrenzend an die Zwischenschicht (120, 220, 320, 520) vorgesehen ist.

6. Verglasung nach Anspruch 4 oder 5, bei der der Reflektor an der Oberfläche 2 der Verglasung vorgesehen ist.

7. Verglasung nach einem der Ansprüche 3 bis 6, bei der der Reflektor die gleiche Größe und Konfiguration wie das Lichtstreumittel aufweist.

8. Verglasung nach einem der Ansprüche 3 bis 7, bei der der Reflektor ein lichtstreuendes reflektierendes Material umfasst.

9. Verglasung nach Anspruch 8, bei der das lichtstreuende reflektierende Material ein weißes oder metallisch wirkendes Material ist.

10. Verglasung nach einem der vorhergehenden Ansprüche, bei der mindestens eine Lage der Verglasung eine Scheibe aus eisenarmem Glas ist, die eine Transmission für sichtbares Licht von mehr als 85 % aufweist, vorzugsweise bei Dicken im Bereich von 2 bis 20 mm.

**Revendications**

1. Vitrage (12, 112, 212, 312, 412, 512) pour un véhicule, le vitrage comprenant au moins une première épaisseur (16, 116, 216, 316, 416, 516), au moins une seconde épaisseur (18, 118, 218, 318, 418) et une couche intermédiaire (20, 120, 220, 320, 420, 520) entre elles,

la seconde épaisseur pouvant être montée par rapport à une source de lumière (26, 126, 226), la source de lumière pouvant servir à coupler de la lumière dans ladite seconde épaisseur, dans lequel des moyens de dispersion de lumière (22, 122, 222, 322, 422, 522) comprenant une encre non opaque sont prévus sur une surface extérieure (24) de la seconde épaisseur, les moyens de dispersion de lumière étant adaptés pour amener au moins une partie de la lumière couplée à se disperser et à être transmise par le biais desdits moyens de dispersion, dans lequel l'encre non opaque est une encre semi-transparente ou translucide, et une encre opaque (128, 228, 258, 328, 368, 70, 428, 478, 528, 568, 578) est prévue sur au moins une surface du vitrage, dans lequel les moyens de dispersion de lumière sont prévus sur une surface 4 (24) du vitrage et l'encre opaque (128, 228, 328, 70, 428, 528) est prévue adjacente à au moins une partie des moyens de dispersion de lumière (22, 122, 222, 322, 422, 522) sur une surface 4 du vitrage.

2. Vitrage selon la revendication 1, dans lequel l'encre non opaque est prévue comme une pluralité de lignes discontinues ou de points sur la surface du vitrage.

3. Vitrage selon la revendication 1 ou 2, dans lequel un réflecteur (150, 250, 350, 550) est prévu sur une surface (130) de la première ou la seconde épaisseur.

4. Vitrage selon la revendication 3, dans lequel le réflecteur est prévu sur une surface orientée vers l'intérieur de l'épaisseur ou de chaque épaisseur.

5. Vitrage selon la revendication 4, dans lequel le réflecteur (150, 250, 350, 550) est prévu adjacent à la couche intermédiaire (120, 220, 320, 520).

6. Vitrage selon la revendication 4 ou 5, dans lequel le réflecteur est prévu sur une surface 2 du vitrage.

7. Vitrage selon l'une quelconque des revendications 3 à 6, dans lequel le réflecteur est de la même taille et configuration que les moyens de dispersion de lumière.

8. Vitrage selon l'une quelconque des revendications 3 à 7, dans lequel le réflecteur comprend une matière réfléchissante diffusant la lumière.

9. Vitrage selon la revendication 8, dans lequel la matière réfléchissante diffusant la lumière est une matière blanche ou à effet métallique.

10. Vitrage selon l'une quelconque des revendications précédentes, dans lequel au moins une épaisseur de vitrage est une vitre de verre à faible teneur en fer ayant une transmission de lumière visible de plus de 85 % de préférence à des épaisseurs dans la plage de 2 à 20 mm.

Figure 1

Figure 2

Figure 3

Figure 4

Figure 5

Figure 6

Figure 7a

Figure 7b

Figure 8a

Figure 8b

412

416

A'

420

428    478    B    418    422

A

A

Figure 9a

428

426

422    478

Figure 9b

Figure 10

**EP 2 983 909 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005054915 A